(19) Europäisches Patentamt
European Patent Office
Office européen des brevets

(11) Numéro de publication: **0 403 405 B1**

(12) **FASCICULE DE BREVET EUROPEEN**

(45) Date de publication de fascicule du brevet: **31.08.94**

(51) Int. Cl.5: **A01N 47/36**, //(A01N47/36, 37:40)

(21) Numéro de dépôt: **90420274.4**

(22) Date de dépôt: **07.06.90**

# (54) Association herbicide à base de bromoxynil ou de l'un de ses dérivés.

(30) Priorité: **13.06.89 FR 8908154**

(43) Date de publication de la demande:
**19.12.90 Bulletin 90/51**

(45) Mention de la délivrance du brevet:
**31.08.94 Bulletin 94/35**

(84) Etats contractants désignés:
**AT BE CH DE DK ES FR GB GR IT LI LU NL SE**

(56) Documents cités:
**EP-A- 0 303 383**

(73) Titulaire: **RHONE-POULENC AGROCHIMIE**
**14-20, rue Pierre Baizet**
**F-69009 Lyon (FR)**

(72) Inventeur: **Bernard, Thierry**
**5 Chemin du Calvaire**
**F-69570 Dardilly (FR)**

(74) Mandataire: **Brachotte, Charles et al**
**RHONE-POULENC AGROCHIMIE**
**DPI**
**BP 9163**
**F-69263 Lyon Cedex 09 (FR)**

EP 0 403 405 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne un produit herbicide contenant une association synergique de bromoxynil (I) ou de l'un de ses dérivés et de 2-[[(4,6-diméthoxypyrimidin-2-yl) aminocarbonyl]aminosulfonyl]-N,N-diméthyl-3-pyridinecarboxamide (II) convenant de façon remarquable au contrôle sélectif des mauvaises herbes dans les cultures de maïs. L'invention concerne également l'utilisation du nouveau produit, éventuellement sous forme de composition, à titre d'herbicide et un procédé pour contrôler en post émergence les mauvaises herbes dans les cultures de maïs à l'aide du produit ou de la composition.

### Art antérieur

Le bromoxynil ou l'un de ses dérivés est bien connu comme herbicide antidicotylédones de post émergence sélectif des cultures de maïs, notamment par le "Pesticide manual" $8^{ème}$ édition. Ce composé ou l'un de ses dérivés est, par contre, peu ou pas actif contre les mauvaises herbes graminées.

Par ailleurs, on connait par EP-A-232067 et EP-A-237292 le 2-[[(4,6-diméthoxypyrimidin-2-yl)-aminocarbonyl]aminosulfonyl]-N,N-diméthyl-3-pyridinecarboxamide en tant qu'herbicide particulièrement de post-émergence sélectif des cultures de maïs. Ces deux derniers documents mentionnent, par ailleurs, que en général les N-pyrimidinyl-N-pyridine sulfonylurées peuvent être associées avec certains herbicides dont le bromoxynil. Cependant, aucune association de ce type n'est décrite

De même, la demande de brevet européen n° 0303383 mentionne certaines associations avec l'herbicide décrit dans EP-A-232067.

### Objet de l'invention

Il est néanmoins toujours souhaitable d'améliorer l'action des matières actives herbicides.

L'invention propose ainsi quant à elle une nouvelle association qui résulte d'un choix limité effectué parmi un nombre pratiquement infini de possibilités et qui procure des avantages importants qui seront mieux compris à la lumière de ce qui va être décrit ci-après.

Il a été trouvé ainsi de manière parfaitement inattendue que l'association améliorait de façon notable et surprenante l'action respective et isolée des deux matières actives pour un certain nombre d'adventices particulièrement nuisibles dans les cultures, notamment de maïs. Cela, tout en conservant la sélectivité vis à vis des cultures. Il en découle donc une amélioration du spectre d'activité et une possibilité de diminuer la dose respective de chaque matière active utilisée, cette dernière qualité étant particulièrement importante pour des raisons écologiques aisément compréhensibles.

Ainsi, l'association présente un remarquable degré de synergisme comme c'est défini par PML Tammes, Netherlands Journal of Plant Pathology, 70 (1964), p. 7380 dans un article intitulé "Isoboles, une représentation graphique de synergie dans les pesticides" ou comme défini par Limpel, L.E., P.H. Schuldt and D. Lamont, 1962, Proc. NEWCC 16:48-53, en utilisant la formule :

$$E = X + Y - \frac{XY}{100}$$

où E est le pourcentage attendu d'inhibition de la croissance par un mélange des deux herbicides à des doses définies, X est le pourcentage d'inhibition observé de la croissance par l'herbicide A à une dose définie, Y est le pourcentage d'inhibition observé de la croissance par l'herbicide B à une dose définie. Quand le pourcentage d'inhibition observé de l'association est plus grand que E il y a synergie.

En particulier, l'association objet de la présente invention s'est révélée spécialement efficace pour contrôler :

- Amaranthus retroflexus,
- Echinochloa crus-galli,
- Digitaria sanguinalis
- Lolium multiflorum,
- Polygonum convolvulus,
- Solanum nigrum,
- Ipomea hederacea.

L'invention concerne en premier lieu un produit contenant une association synergique de bromoxynil sous forme ester (I) et du 2-[[4,6-diméthoxypyrimidin-2-yl) aminocarbonyl]aminosulfonyl]-N,N-diméthyl-3-pyridinecarboxamide (II).

L'invention concerne également l'utilisation des composés de formule :

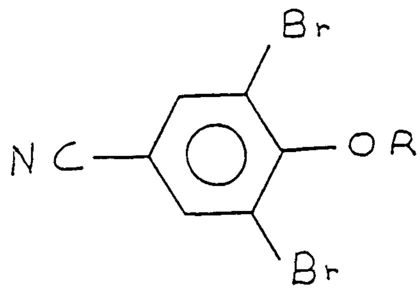

dans laquelle :

R est un atome d'hydrogène ou un atome de potassium ou de sodium ou un radical CO-$C_2$-$C_{10}$ alkyle, de préférence le butanoate ou l'heptanoate ou l'octanoate de bromoxynil

comme synergiste en compositions herbicides contenant du 2-[[(4,6-diméthoxy pyrimidin-2-yl) aminocarbonyl]-amino sulfonyl]-N,N-diméthyl-3-pyridinecarboxamide (II).

De préférence, l'octanoate ou l'heptanoate de bromoxynil ou un mélange des deux sont utilisés.

Dans le cas des dérivés de bromoxynil où R est un radical CO-$C_2$-$C_{10}$ alkyle on utilisera une association dont le rapport en équivalent molaire de (I) par rapport au nombre de mole de (II) 2-[[4,6-diméthoxypyrimidin-2-yl) aminocarbonyl]aminosulfonyl]-N,N-diméthyl-3-pyridinecarboxamide est compris entre 0,2 et 50, de préférence 0,5 et 18.

Dans le cas de bromoxynil (R = H) on utilisera une association dont le rapport en mole bromoxynil par rapport à II est compris entre 1 et 100 de préférence 1,5 et 60.

Les associations sont le plus souvent de type binaire mais on peut envisager quelquefois des associations ternaires ou quaternaires avec un ou plusieurs autres pesticides compatibles.

Ces produits selon l'invention sont destinés à une utilisation simultanée, séparée ou étalée dans le temps pour le traitement herbicide des végétaux indésirables, notamment contre les adventices présentes dans les cultures de maïs.

Dans le cas d'une utilisation simultanée (qui est préférée), on peut utiliser des produits prêts à l'emploi contenant l'association des matières actives décrites plus haut. On peut également utiliser des produits préparés juste avant l'emploi, par mélange extemporanné des matières actives comme elles sont décrites ci-après.

L'utilisation peut également consister à utiliser le produit en traitant les cultures à protéger successivement par l'une puis l'autre des matières actives de formule (I) et (II) de manière à former in situ sur la plante le produit selon l'invention.

L'utilisation des produits selon l'invention s'effectue la plupart du temps sous forme de composition herbicide comportant un ou plusieurs supports acceptables en agriculture et/ou un ou plusieurs agents tensio actifs.

Ainsi dans le cas de préparations extemporannées chaque matière active peut être sous la forme d'une compositon. Par contre, dans le cas d'un mélange prêt à l'emploi c'est l'association elle-même qui se trouve sous la forme d'une composition.

Ces compositions, utilisables comme agents herbicides, contiennent, outre la matière active ou l'association (selon qu'il s'agisse d'une préparation extemporannée ou d'un mélange prêt à l'emploi), des supports solides ou liquides acceptables en agriculture et des agents tensio-actifs également acceptables en agriculture. En particulier sont utilisables les supports inertes et usuels et les agents tensio-actifs usuels. Ces compositions font également partie de l'invention.

Ces compositions peuvent contenir aussi toute sorte d'autres ingrédients tels que, par exemple, des colloïdes protecteurs, des adhésifs, des épaississants, des agents thixotropes, des agents de pénétration, des stabilisants, des séquestrants, etc... . Plus généralement les matières actives ou associations utilisées dans l'invention peuvent être combinées à tous les additifs solides ou liquides correspondant aux techniques habituelles de la mise en formulation.

D'une façon générale, les compositions selon l'invention contiennent habituellement de 0,05 à 95 % environ (en Poids) de la matière active ou d'une association selon l'invention.

Par le terme "support", dans le présent exposé, on désigne une matière organique ou minérale, naturelle ou synthétique, avec laquelle le produit ou l'association est combiné pour faciliter son application sur la plante. Ce support est solide (argiles, silicates naturels ou synthétiques, silice, résines, cires, engrais solides, etc...) ou liquide (solvant).

L'agent tensioactif peut être un agent émulsionnant, dispersant ou mouillant de type ionique ou non ionique ou un mélange de tels agents tensioactifs. On peut citer par exemple des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés, des esters d'acides gras et de polyols, les dérivés à fonction sulfates, sulfonates et phosphates des composés précédents.

Dans le cas des préparations prêtes à l'emploi la formulation utilisable est avantageusement une suspoémulsion ou une suspension concentrée de préférence en phase organique telle que celle décrite dans EP-A-313317 ou une poudre mouillable selon les cas. Si le bromoxynil est sous la forme ester, la formulation peut être une suspoémulsion obtenue par exemple, par émulsification d'un concentré émulsionnable de bromoxynil comme le Buctril 20 (200g/l), Buctril 21 (225g/l) mentionnés dans le Pesticide manual 8$^{ème}$ édition, dans une suspension concentrée en phase organique ou aqueuse de 2-[[(4,6-diméthoxypyrimidin-2-yl) aminocarbonyl]aminosulfonyl]-N,N-diméthyl-3-pyridinecarboxamide comme celle décrite dans EP-A-237292 à 1 page 46 exemple n° 14.

Ou bien la formulation peut être une suspension concentrée en phase organique obtenue par simple dissolution du bromoxynil ester à l'état de produit technique dans une suspension concentrée en phase organique de 2-[[(4,6-diméthoxypyrimidin-2-yl) aminocarbonyl]aminosulfonyl]-N,N-diméthyl-3-pyridinecarboxamide telle que décrite dans EP-A-313317. Si le bromoxynil est sous forme de sel de potassium ou de sodium la formulation est une suspension concentrée obtenue par mélange d'une solution de bromoxynil dans l'eau avec la même suspension concentrée que celle précédemment décrite à propos de la 2-[[(4,6-diméthoxypyrimidin-2-yl)aminocarbonyl]aminosulfonyl]-N,N-diméthyl-3-pyridinecarboxamide ou une poudre mouillable. Si le bromoxynil est sous forme phénolique la formulation est une suspension concentrée obtenue par mélange d'une suspension concentrée de bromoxynil comme litarol (250g/l) mentionné dans le Pesticide manual et d'une suspension concentrée de 2-[[4,6-diméthoxypyrimidin-2-yl)aminocarbonyl]-aminosulfonyl]-N,N-diméthyl-3-pyridinecarboxamide comme décrit précédemment ou bien une poudre mouillable.

Dans le cas des produits préparés juste avant l'emploi par mélange extemporanné il est possible d'utiliser les formes bien connues de préparation du bromoxynil ou de ses dérivés et les formes de préparation de 2-[[4,6-diméthoxypyrimidin-2-yl] aminocarbonyl]-amino sulfonyl]-N,N-diméthyl-3-pyridinecarboxamide indiquées dans les demandes de brevet EP-A-232067, 237292, 313317.

L'invention concerne également un procédé pour contrôler les mauvaises herbes spécialement en un lieu où poussent des cultures ou sont destinés à pousser des cultures, notamment de maïs qui consiste à appliquer une dose efficace d'un produit herbicide contenant une association synergique de bromoxynil sous forme ester (I) et de 2-[[(4,6-diméthoxy pyrimidin-2-yl)aminocarbonyl]-amino sulfonyl]-N,N-diméthyl-3-pyridine carboxamide (II).

Lors de l'application, la dose devrait être suffisante pour contrôler la croissance des adventices sans causer de dommages substantiels permanents aux dites cultures. Par dose efficace on entend justement dans ce contexte la dose qui permet d'obtenir ce résultat.

L'application est effectuée en post levée. On entend désigner par post levée l'application aux parties aériennes ou exposées des mauvaises herbes qui ont émergé de la surface du sol.

L'application est de préférence faite à partir du stade 2-3 feuilles de la culture jusqu' au stade 5-6 feuilles, ce qui correspond approximativement à un traitement compris entre 15 jours après la levée de la culture jusqu'à cinq mois.

Parmi les mauvaise herbes qui peuvent-être contrôlées par le dit produit on peut citer : Chenopodium hybridum, Chenopodium polyspermum, Chenopodium album, Amaranthus retroflexus, Amaranthus hybridus, Polygonum pensylvanicum, Polygonum lapathifolium, Polygonum persicaria, Ambrosia artemisiifolia, Ambrosia trifida, Xanthium pensylvanicum, Xanthium strumarium, Bidens pilosa, Ipomea spp, Solanum nigrum, Mercurialis annua, Portulaca oleracca, Sinapis arvensis, Atriplex patula, Atriplex hastata, Datura stramonium, Brassica nigra, Cassia obtusifolia, Convolvulus arvensis, Abutilon theophrasti, Sesbania exaltata, Polygonum convolvulus, Reseda lutea, Raphanus raphanistrum, Hypericum perforatum, Helianthus annuus, Galinsoga ciliata, Conyza canadensis, Euphorbia helioscopia. Parmi les mauvaises herbes pour

lesquelles on observe un effet herbicide particulièrement inattendu on cite : Echinochloa crus galli et Digitaria sanguinalis.

Les quantités de produit contenant les matières actives de formule (I) et (II) peuvent varier selon la nature des mauvaises herbes, de la culture lorsque le produit est appliqué à la dite culture, de la composition utilisée, de l'époque de l'application ou des conditions climatiques.

En général compte tenu de ces facteurs on appliquera entre 100 et 500 g de produit par hectare dans le cas des dérives de bromoxynil sous la forme ester. Mais il doit être bien compris que des doses plus basses ou plus élevées peuvent être utilisées selon le problème particulier à résoudre.

De préférence on appliquera entre 200 et 400 g de produit par hectare.

De préférence encore l'invention a pour objet un : procédé pour contrôler les mauvaises herbes choisies parmi Echinochloa crus galli ou Digitaria sanguinalis dans les champs de maïs en post levée dudit maïs et desdites mauvaises herbes par application sur les feuilles desdites mauvaises herbes, sous forme d'une composition herbicide selon l'invention, de 30 à 50 g par hectare de II (2-[[4,6-diméthoxypyrimidin-2-yl )aminocarbonyl]aminosulfonyl]-N,N-diméthyl-3-pyridinecarboxamide) et 200 à 300 g de bromoxynil octanoate, de préférence 225 à 275 g/ha de bromoxynil octanoate.

En général compte tenu de ces facteurs on appliquera entre 400 et 900 g/ha de produit dans le cas du bromoxynil sous la forme phénolique avec évidemment la réserve que des doses plus basses ou plus élevées peuvent être utilisées selon le problème particulier à résoudre.

De préférence on appliquera entre 500 et 800 g de produit par hectare dans ce cas-ci.

L'invention va maintenant être décrite par rapport à des exemples concrets de réalisation qui ne sont bien entendu donnés qu'à titre indicatif ne pouvant en aucune façon limiter la portée de ladite invention.

Afin de simplifier la méthode et parvenir à une meilleure base de comparaison, on a choisi

- Echinochloa crus-galli,
- Lolium multiflorum,
- Polygonum convolvulus,
- Solanum nigrum,
- Ipomea hederacea.

pour montrer l'activité du produit selon l'invention sur les cultures de maïs

Mode expérimental général

L'application est effectuée en post levée des espèces végétales.

Dans des pots de 7 x 7 x 8 cm remplis de terre agricole légère, on sème un nombre de graines déterminé en fonction de l'espèce végétale et de la grosseur de la graine.

On recouvre ensuite les graines d'une couche de terre d'environ 3 mm d'épaisseur et on laisse germer la graine jusqu'à ce qu'elle donne naissance à une plantule au stade convenable. Le stade de traitement pour les graminées est le stade de "deuxième feuille en formation". Le stade de traitement pour les dicotylédones, est le stade "cotylédons étalés, première feuille vraie en développement".

Les pots sont alors traités par pulvérisation de bouillie en quantité correspondant à une dose volumique d'application de 500 l/ha et contenant la matière active à pulvériser.

La bouillie utilisée pour le traitement est une solution des matières actives dans un mélange acétone-eau en proportion 50/50 contenant du Cemulsol NP 10 (agent tensio actif) constitué de d'alkyle phénol polyethoxylé notamment de nonylphenolpolyethoxylé et du Tween 20 (agent tensio actif constitué d'un oléate de dérivé polyoxyéthylène du sorbitol) à raison de 50 % du poids des matières actives.

Les pots sont alors placés dans des bacs destinés à recevoir l'eau d'arrosage, en subirrigation, et maintenus pendant 24 jours à température anbiante sous 70 % d'humidité relative.

Au bout de 24 jours, on compte le nombre de plantes vivantes dans les pots traités par la bouillie contenant la matière active à tester et le nombre de plantes vivantes dans un pot témoin traité selon les mêmes conditions, mais au moyen d'une bouillie ne contenant pas de matière active. On détermine ainsi le pourcentage de destruction des plantes traitées par rapport au témoin non traité. Un pourcentage de destruction égal à 100 % indique qu'il y a eu destruction complète de l'espèce végétale considérée et un pourcentage de 0 % indique que le nombre de plantes vivantes dans le pot traité est identique à celui dans le pot témoin.

Exemple 1 :

Essai montrant la nature de l'effet synergique biologique de l'association octanoate de bromoxynil (I)-2-[[(4,6-diméthoxy pyrimidin-2-yl) aminocarbonyl]-amino sulfonyl]-N,N-diméthyl-3-pyridine carboxamide (II)-

sur Echinochloa Crus-Galli.

L'expérimentation est conduite en ayant semé des graines d'Echinochloa Crus-Galli.

Le tableau ci-dessous représente la moyenne de deux essais en serre.

| | | I g/ha | | | | |
|---|---|---|---|---|---|---|
| | | 0 | 16 | 31 | 62 | 125 |
| | 0 | 0 | 0 | 0 | 0 | 0 |
| II g/ha | 8 | 50,5 | 61,5 | 61,5 | 80,5 | 75 |

Les résultats indiqués dans le tableau ci-dessus montrent clairement en se référant à la formule indiquée en début de description le degré excellent et même inattendu de synergie obtenu avec l'association de l'invention.

Exemple 2

Essai montrant la nature de l'effet synergique biologique de l'association octanoate de bromoxynil (I) -2-[-[4,6-diméthoxypyrimidin-2-yl)aminocarbonyl]aminosulfonyl]-N,N-diméthyl-3-pyridinecarboxamide (II) sur Lolium multiforum.

L'expérimentation est conduite en ayant semé des graines de Lolium multiflorum.

Le tableau ci-dessous représente la moyenne de deux essais :

| | | I g/ha | | | | |
|---|---|---|---|---|---|---|
| | | 0 | 16 | 31 | 62 | 125 |
| | 0 | 0 | 0 | 0 | 6 | 9,5 |
| II g/ha | 8 | 34 | 72 | 68 | 61,5 | 60,5 |

Les résultats indiqués dans le tableau ci-dessus montrent clairement, en se référant à la formule indiquée en début de description le degré excellent et inattendu de synergie obtenue avec l'association de l'invention.

Exemple 3

Essai montrant la nature de l'effet synergique biologique de l'association octanoate de bromoxynil (I) - [2-[-[4,6-diméthoxypyrimidin-2-yl)aminocarbonyl]aminosulfonyl]-N,N-diméthyl-3-pyridinecarboxamide ] (II) sur Polygonum convolvulus

L'expérimentation est conduite en ayant semé des graines de Polygonum convolvulus.

Le tableau ci-dessous représente la moyenne de deux essais :

| II g/ha \ I g/ha | 0 | 16 | 31 | 62 | 125 |
|---|---|---|---|---|---|
| 0 | 0 | 0 | 10 | 29 | 81 |
| 16 | 46 | 50 | 69 | 88 | 100 |
| 31 | 59 | 68 | 77 | 98,5 | 99,5 |

Les résultats indiqués dans le tableau ci-dessous montrent clairement, en se référant à la formule indiquée en début de description le degré excellent et inattendu de synergie obtenue avec l'association de l'invention.

Exemple 4

Essai montrant l'effet synergique biologique de l'association octanoate de bromoxynil (I) - [2-[[4,6-diméthoxypyrimidin-2-yl)aminocarbonyl]aminosulfonyl]-N,N-diméthyl-3-pyridinecarboxamide ] (II) sur Solanum nigrum

L'expérimentation est conduite en ayant semé des graines de Solanum nigrum.
Le tableau ci-dessous représente la moyenne de deux essais :

| II g/h \ I g/ha | 0 | 16 | 31 | 62 | 125 |
|---|---|---|---|---|---|
| 0 | 0 | 16 | 29,5 | 82 | 86,5 |
| 16 | 65,5 | 71 | 72,5 | 98,5 | 98,5 |

Les résultats indiqués dans le tableau ci-dessus montrent clairement, en se référant à la formule indiquée en début de description le degré excellent et inattendu de synergie obtenue avec l'association de l'invention.

Exemple 5

Essai montrant l'effet synergique biologique de l'association octanoate de bromoxynil (I) - [2-[[4,6-diméthoxypyrimidin-2-yl)aminocarbonyl]aminosulfonyl]-N,N-diméthyl-3-pyridinecarboxamide ] (II) sur Ipomea Hederacea

L'expérimentation est conduite en ayant semé des graines d'Ipoméa Hederacea.

I g/ha

| | | | | | | |
|---|---|---|---|---|---|---|
| | | 0 | 16 | 31 | 62 | 125 |
| | 0 | 0 | 0 | 0 | 42 | 83 |
| II g/ha | 16 | 62 | 62 | 80 | 90 | 93 |

Les résultats indiqués dans le tableau ci-dessus montrent clairement, en se référant à le formule indiquée en début de description le degré excellent et inattendu de synergie obtenue avec l'association de l'invention.

Exemple 6

Essai montrant l'absence de phytotoxicité de de l'association octanoate de bromoxynil (I) - [2-[[4,6-diméthoxypyrimidin-2-yl)aminocarbonyl]aminosulfonyl]-N,N-diméthyl-3-pyridinecarboxamide ] (II) sur Zea maïs

L'expérimentation mise en oeuvre comme précédemment mais après avoir semé des graines de maïs, conduit aux résultats indiqués dans le tableau ci-dessous :

I g/ha

| | | | | | | |
|---|---|---|---|---|---|---|
| | | 0 | 16 | 31 | 62 | 125 |
| | 0 | 0 | 0 | 0 | 0 | 0 |
| II g/ha | 8 | 0 | 0 | 0 | 0 | 0 |
| | 16 | 0 | 0 | 0 | 0 | 0 |
| | 31 | 0 | 0 | 0 | 0 | 0 |

On constate donc que l'association octanoate de bromoxynil -[2-[[4,6-diméthoxypyrimidin-2-yl)-aminocarbonyl]aminosulfonyl]-N,N-diméthyl-3-pyridinecarboxamide] bien qu'augmentant l'activité respective des deux matières sur les adventices exemplifiées ne révèle aucune phytotoxicité sur la culture.

Exemple 7

Essai montrant l'absence de phytotoxicité de l'association de la forme phénolique de bromoxynil (I) - [2-[-[4,6-diméthoxypyrimidin-2-yl)aminocarbonyl]aminosulfonyl]-N,N-diméthyl-3-pyridinecarboxamide ] (II) sur Zea Maïs.

L'expérimentation mise en oeuvre comme précédemment mais après avoir semé des graines de maïs, conduit aux résultats indiqués dans le tableau ci-dessous :

| | | I | | | | |
|---|---|---|---|---|---|---|
| | | 0 | 31 | 62 | 125 | 250 |
| II | 0 | 0 | 0 | 0 | 0 | 0 |
| | 8 | 0 | 0 | 0 | 0 | 0 |
| | 16 | 0 | 0 | 0 | 0 | 0 |
| | 31 | 0 | 0 | 0 | 0 | 0 |

On constate donc que l'association forme phénolique de bromoxynil -[2-[[4,6-diméthoxypyrimidin-2-yl)-aminocarbonyl]aminosulfonyl]-N,N-diméthyl-3-pyridinecarboxamide ] bien qu'augmentant l'activité respective des deux matières actives sur les adventices exemplifiées ne révèle aucune phytotoxicité sur la culture.

Exemple 8

Essai montrant l'effet synergique biologique de l'association bromoxynil forme phénolique (I) - [2-[[4,6-diméthoxypyrimidin-2-yl)aminocarbonyl]aminosulfonyl]-N,N-diméthyl-3-pyridinecarboxamide ] (II) sur Echinochloa Crus Galli.

| | | II g/ha | | | | |
|---|---|---|---|---|---|---|
| | | 0 | 31 | 62 | 125 | 250 |
| II g/ha | 0 | 0 | 0 | 0 | 0 | 0 |
| | 8 | 50,5 | 41,5 | 61,5 | 61,5 | 52 |

Le tableau ci-dessus représente la moyenne de 2 essais.

Exemple 9

Essai montrant l'effet synergique biologique de l'association bromoxynil forme phénolique (I) - [2-[[4,6-diméthoxypyrimidin-2-yl)aminocarbonyl]aminosulfonyl]-N,N-diméthyl-3-pyridinecarboxamide ] (II) sur Lolium Multiflorum.

| | I g/ha | | | | | |
|---|---|---|---|---|---|---|
| | | 0 | 31 | 62 | 125 | 250 |
| II g/ha | 0 | 0 | 0 | 0 | 3 | 6 |
| | 8 | 34 | 40 | 60 | 59,5 | 53 |

Le tableau ci-dessus représente la moyenne de 2 essais.

Exemple 10

Essai montrant l'effet synergique biologique de l'association bromoxynil forme phénolique (I) - [2-[[4,6-diméthoxypyrimidin-2-yl)aminocarbonyl]aminosulfonyl]-N,N-diméthyl-3-pyridinecarboxamide ] (II) sur Polygonum Convolvulus.

| | I g/ha | | | | | |
|---|---|---|---|---|---|---|
| | | 0 | 31 | 62 | 125 | 250 |
| II g/ha | 0 | 0 | 0 | 27 | 58,5 | 98,5 |
| | 8 | 46 | 53 | 60,5 | 99 | 99 |

Le tableau ci-dessus représente la moyenne de 2 essais.

Exemple 11

Essai montrant l'effet synergique biologique de l'association bromoxynil forme phénolique (I) -[2-[[4,6-diméthoxypyrimidin-2-yl)aminocarbonyl]aminosulfonyl]-N,N-diméthyl-3-pyridinecarboxamide ] (II) sur Ipomea hederacea.

| | I g/ha | | | | | |
|---|---|---|---|---|---|---|
| | | 0 | 31 | 62 | 125 | 250 |
| II g/ha | 0 | 0 | 0 | 3 | 6 | 56 |
| | 8 | 62 | 56 | 72 | 68 | 88 |

Le tableau ci-dessus représente la moyenne de 2 essais.

Exemple 12

Essai montrant l'effet synergique biologique de l'association bromoxynil forme phénolique (I) - [2-[[4,6-diméthoxypyrimidin-2-yl)aminocarbonyl]aminosulfonyl]-N,N-diméthyl-3-pyridinecarboxamide ] (II) sur Amaranthus Retroflexus.

L'expérimentation est mise en oeuvre en ayant semé des graines de Amaranthus Retroflexus. Les résultats indiqués dans le tableau ci-dessous montrent clairement, en se référant à la formule indiquée en début de description, le degré excellent et inattendu de synergie obtenue avec l'association de l'invention.

I g/ha

| II g/ha | 0 | 31 | 62 | 125 | 250 |
|---|---|---|---|---|---|
| 0 | 0 | 6 | 10 | 15,5 | 36,5 |
| 8 | 59,5 | 66,5 | 69 | 69 | 98,5 |

Expérimentation en champ sur cultures de maïs

Le champ a été divisé en parcelles égales. Les espèces ont été semées dans chaque parcelle, en rangées distantes de 15 cm. Ces espèces conmprenaient les monocotylédones suivantes :

- Panic pied de coq : Echinochloa crus-galli (ECHCG)
- Digitaire : Digitaria sanguinalis (DIGSA)

Sur ces deux plantes, on applique lorsqu'elles ont atteint le stade 3 - 6 feuilles, c'est à dire environ trois semaines après le semis, des bouillies obtenues de la façon suivante :

On mélange avant application une suspension concentrée de sulfonylurée contenant 40 g/l de matière active et d'eau. On ajoute un concentré émulsionnable de bromoxynil octanoate contenant 250 g/l de matière active (Buctril) pour l'obtention de la bouillie. On applique ensuite ladite bouillie. Une parcelle non traitée est placée en contiguïté avec chaque parcelle traitée à tire de comparaison et de notation. Ces notations sont effectuées après une période déterminée indiquée pour chaque essai et sont exprimées en pourcentage de destruction de chaque espèce, comparativement à la même espèce dans chaque parcelle non traitée.

Essai en champs I (Espagne)

Le volume d'application de la bouillie est de 300 l/ha, la date d'application se situe au stade de 3 - 6 feuilles en moyenne pour les adventices et la date de notation est 5 et 12 jours après le traitement pour le maïs et 27 jours pour les adventices. On obtient les résultats suivants :

| | Maïs | | ECHCG | DIGSA |
|---|---|---|---|---|
| | 5 | 12 | | |
| 40 | 0 | 0 | 62 | 67 |
| 250 + 40 | 10 | 5 | 100 | 70 |
| 60 | 0 | 0 | 100 | 80 |

On observe un très fort synergisme avec le bromoxynil octanoate alors que cet herbicide n'a absolument aucune activité sur les graminées. Par ailleurs, la légère phytotoxicité observée à 5 jours est rapidement éliminée et la plante cultivée récupère complètement très rapidement.

Essai en champs II (Espagne)

Le volume d'application est identique au précédent. La date d'application moyenne se situe au stade 3 - 6 feuilles pour les adventices et 3 - 4 feuilles pour le maïs. La date de notation est de 12 jours pour le maïs et 26 jours pour les adventices après le traitement. On obtient les résultats suivants.

| | Maïs | ECHCG | DIGSA |
|---|---|---|---|
| 40 | 0 | 92 | 72 |
| 250 + 40 | 2 | 100 | 70 |
| 60 | 0 | 100 | 70 |

On observe également un synergisme important pour la dose 40/250.

Essai en champs III (France)

Le volume d'application est identique au précédent. La date d'application moyenne se situe au stade 2 - 3 feuilles pour le maïs et au stade émergence 2 feuilles pour les adventices.
On obtient les résultats suivants.

| | Maïs | DIGSA |
|---|---|---|
| 40 | 0 | 25 |
| 250 + 40 | 5 | 40 |
| 60 | 5 | 15 |
| 250 + 60 | 5 | 35 |

Essai en champs IV (France)

Le volume d'application est de 380 l/ha. La date d'application moyenne se situe au stade 2 - 3 feuilles pour l'adventice et au stade 5 - 7 feuilles pour le maïs.
On obtient les résultat suivants

| | ECHCG |
|---|---|
| 40 | 30 |
| 250 + 40 | 87 |
| 60 | 65 |
| 250 + 60 | 77 |

Essai en champs V (France)

Le volume d'application est de 500 l/ha. La date d'application se situe au stade de 3 - 5 feuilles pour l'adventice. la notation se fait 52 jours après le traitement.
On obtient les résultats suivants.

| | ECHCG |
|---|---|
| 40 | 50 |
| 250 + 40 | 82 |
| 60 | 72 |
| 250 + 60 | 90 |

En conclusion ces résultats montrent l'action synergique parfaitement inattendue en l'absence d'action du bromoxynil octanoate sur les graminées.

**Revendications**

1. Produit herbicide contenant une association synergique de bromoxynil sous forme ester (I) et de 2-[[-(4,6-diméthoxy pyrimidin-2-yl) aminocarbonyl]-amino sulfonyl]-N,N-diméthyl-3-pyridine carboxamide (II).

2. Produit selon la revendication 1, caractérisé en ce que le composé (I) répond à la formule :

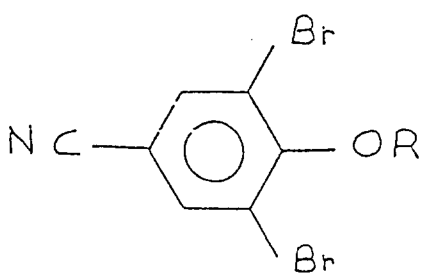

dans laquelle R est un groupe $C_2$-$C_{10}$ alkyle carbonyle.

3. Produit selon la revendication 2, caractérisé en ce que le rapport en équivalent molaire de (I) par rapport à (II) est compris entre 0,2 et 50, de préférence 0,5 et 18

4. Produit selon l'une des revendications 1 à 3, caractérisé en ce que l'ester de bromoxynil est l'heptanoate ou l'octanoate de bromoxynil ou un mélange des deux.

5. Composition herbicide selon l'une des revendications 1 à 4, caractérisée en ce qu'elle contient 0,05 à 95 % en poids du produit selon l'une des revendications 1 à 4.

6. Utilisation de Bromoxynil ou l'un de ses dérivés répondant à la formule

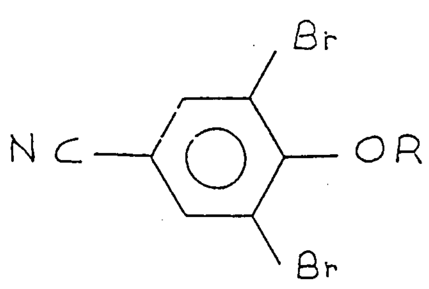

dans laquelle R est l'atome d'hydrogène, de potassium ou de sodium, ou un groupe $C_2$-$C_{10}$ alkylcarbonyle, comme synergiste en compositions herbicides contenant du 2-[[(4,6-diméthoxy pyrimidin-2-yl) aminocarbonyl]-amino sulfonyl]-N,N-diméthyl-3-pyrindine carboxamide (II).

**7.** Utilisation selon la revendication 6 comme synergiste de compositions prêtes à l'emploi ou préparées extemporanément.

**8.** Utilisation selon l'une des revendications 6 ou 7 comme synergiste de compositions comportant en outre un ou plusieurs supports acceptables en agriculture et/ou un ou plusieurs agents tensio actifs.

**9.** Utilisation selon l'une des revendications 6 à 8 comme synergiste de compositions, caractérisée en ce que le Bromoxynil est sous forme d'un ester de formule

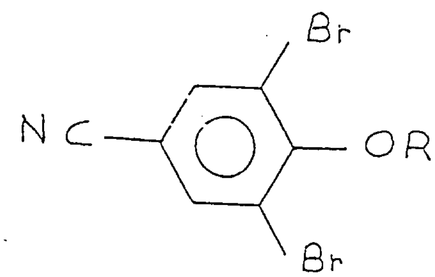

dans laquelle R est un groupe $C_2$-$C_{10}$ alkyle carbonyle.

**10.** Procédé de contrôle des mauvaises herbes en un endroit ou est cultivé du maïs caractérisé en ce qu'on applique audit endroit, en post levée desdites mauvaises herbes une quantité efficace d'un produit selon l'une des revendications 1 à 5.

**11.** Procédé selon la revendication 10, caractérisé en ce qu'on applique entre 100 et 500 g/ha, de préférence entre 200 et 400 g/ha du produit selon l'une des revendications 1 à 5.

**12.** Procédé selon la revendication 10 ou 11, caractérisé en ce que les mauvaises herbes sont choisies parmi :
Polygonum convolvulus, Lolium multiflorum, Solanum nigrum, Echinochloa crus-galli, Amaranthus retroflexus Ipomea hederacea, Digitaria sanguinalis.

**13.** Procédé selon l'une des revendications 10 à 12, caractérisé en ce que ce stade d'application sur la culture est compris entre le stade 2-3 feuilles et 5-6 feuilles.

**14.** Procédé selon l'une des revendications 10 à 13, pour contrôler les mauvaises herbes choisies parmi Echinochloa crus galli ou Digitaria sanguinalis dans les champs de maïs en post levée dudit mais et desdites mauvaises herbes par application sur les feuilles desdites mauvaises herbes, sous forme d'une composition herbicide de 30 à 50 g par hectare de II (2-[[4,6-diméthoxypyrimidin-2-yl)-aminocarbonyl]aminosulfonyl]-N,N-diméthyl-3-pyridinecarboxamide) et 200 à 300 g de bromoxynil octanoate, de préférence 225 à 275 g/ha de bromoxynil octanoate

## Claims

**1.** Herbicidal product containing a synergic combination of bromoxynil in the ester form (I) and of 2-[[(4,6-dimethoxypyrimidin-2-yl)aminocarbonyl]aminosulphonyl]-N,N-dimethyl-3-pyridinecarboxamide (II).

2. Product according to claim 1, characterized in that the compound (I) corresponds to the formula:

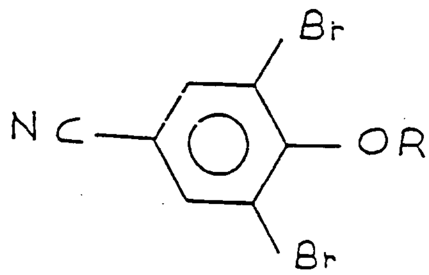

in which R is a $C_2$-$C_{10}$ alkylcarbonyl group.

3. Product according to claim 2, characterized in that the molar equivalent ratio of (I) with respect to (II) is between 0.2 and 50, preferably 0.5 and 18.

4. Product according to one of claims 1 to 3, characterized in that the bromoxynil ester is bromoxynil heptanoate or octanoate or a mixture of the two.

5. Herbicidal composition according to one of claims 1 to 4, characterized in that it contains 0.05 to 95 % by weight of the product according to one of claims 1 to 4.

6. Use of bromoxynil or one of its derivatives corresponding to the formula

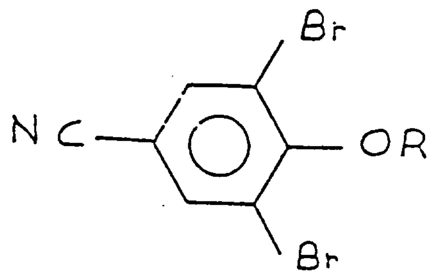

in which R is a hydrogen, potassium or sodium atom or a $C_2$-$C_{10}$ alkylcarbonyl group, as synergist in herbicidal compositions containing 2-[[(4,6-dimethoxypyrimidin-2-yl)aminocarbonyl]aminosulphonyl]-N,N-dimethyl-3-pyridine-carboxamide (II).

7. Use according to claim 6 as synergist of ready-to-use compositions or compositions prepared extemporaneously.

8. Use according to claim 6 or 7 as synergist of compositions additionally containing one or more agriculturally-acceptable vehicles and/or one or more surface-active agents.

9. Use according to one of claims 6 to 8 as synergist of compositions, characterized in that bromoxynil is in the form of an ester of formula:

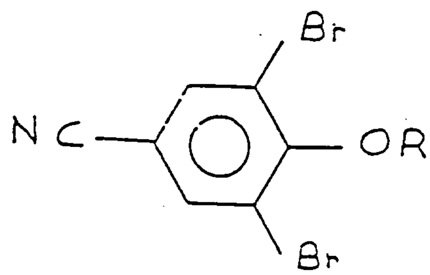

in which R is a $C_2$-$C_{10}$ alkylcarbonyl group.

**10.** Process for controlling weeds in a place where maize is cultivated, characterized in that an effective amount of a product according to one of claims 1 to 5 is applied, at post-emergence of the said weeds, to the said place.

**11.** Process according to claim 10, characterized in that between 100 and 500 g/ha, preferably between 200 and 400 g/ha, of the product according to one of claims 1 to 5 is applied.

**12.** Process according to claim 10 or 11, characterized in that the weeds are chosen from: Polygonum convolvulus, Lolium multiflorum, Solanum nigrum, Echinochloa crus-galli, Amaranthus retroflexus, Ipomea hederacea, Digitaria sanguinalis.

**13.** Process according to one of claims 10 to 12, characterized in that the stage of application to the crop is between the 2-3 leaf and 5-6 leaf stage.

**14.** Process according to one of claims 10 to 13, for controlling weeds chosen from Echinochloa crus-galli or Digitaria sanguinalis in maize fields, at post-emergence of the said maize and of the said weeds, by application to the leaves of the said weeds, in the form of a herbicidal composition, of 30 to 50 g per hectare of II (2-[[(4,6-dimethoxypyrimidin-2-yl)aminocarbonyl]aminosulphonyl]-N,N-dimethyl-3-pyridinecarboxamide) and 200 to 300 g of bromoxynil octanoate, preferably 225 to 275 g/ha of bromoxynil octanoate.

**Patentansprüche**

**1.** Herbizid-Produkt, enthaltend eine synergistische gemeinsame Zubereitung von Bromoxynil in Form eines Esters (I) und von 2-[[(4,6-Dimethoxypyrimidin-2-yl-)aminocarbonyl-]aminosulfonyl-]N,N-dimethyl-3-pyridincarboxamid (II).

**2.** Produkt nach Anspruch 1, dadurch gekennzeichnet, daß die Verbindung (I) der folgenden Formel entspricht

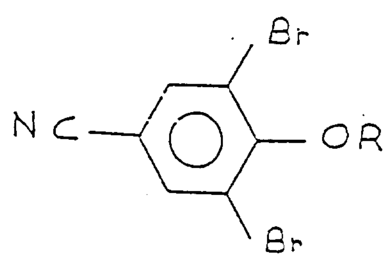

worin R eine ($C_2$- bis $C_{10}$-)Alkylcarbonyl-Gruppe ist.

**3.** Produkt nach Anspruch 2, dadurch gekennzeichnet, daß das Verhältnis der Molequivalente von (I), bezogen auf (II), zwischen 0,2 und 50 einschließlich liegt, vorzugsweise zwischen 0,5 und 18.

4. Produkt nach einem der Ansprüche 1 bis 3, dadurch gekennzeichnet, daß der Bromoxynil-Ester das Heptanoat oder das Octanoat von Bromoxynil oder eine Mischung aus diesen beiden Verbindungen ist.

5. Herbizide Zubereitung nach einem der Ansprüche 1 bis 4, dadurch gekennzeichnet, daß sie 0,005 bis 95 Gew.-% des Produkts nach einem der Ansprüche 1 bis 4 enthält.

6. Verwendung von Bromoxynil oder von einem seiner Derivate, die der folgenden Formel entsprechen

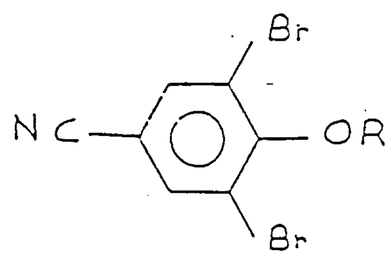

worin R für ein Wasserstoffatom, ein Kaliumatom oder ein Natriumatom oder eine ($C_2$- bis $C_{10}$-)Alkylcarbonyl-Gruppe steht, als synergistisch wirkende Verbindung in herbiziden Zubereitungen, die 2-[[(4,6-Dimethoxypyrimidin-2-yl-)aminocarbonyl-]aminosulfonyl-] N,N-dimethyl-3-pyridincarboxamid (II) enthalten.

7. Verwendung nach Anspruch 6 als synergistisch wirkende Verbindung in gebrauchsfertigen oder kurz vorher frisch zubereiteten Zubereitungen.

8. Verwendung nach Anspruch 6 oder 7 als synergistisch wirkende Verbindung in Zubereitungen, die außerdem einen oder mehrere für den Bereich der Landwirtschaft annehmbare Träger und/oder ein oder mehrere oberflächenaktive Mittel enthalten.

9. Verwendung nach einem der Ansprüche 6 bis 8 als synergistisch wirkende Verbindung in Zubereitungen, dadurch gekennzeichnet, daß das Bromoxynil in Form eines Esters der folgenden Formel vorliegt

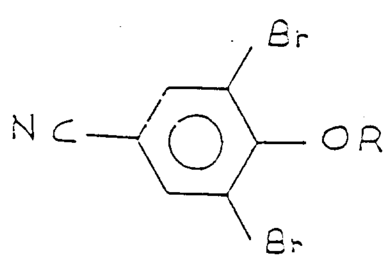

worin R eine ($C_2$- bis $C_{10}$-)Alkylcarbonyl-Gruppe ist.

10. Verfahren zur Kontrolle von Unkräutern an einer Stelle, wo Mais angebaut wird, dadurch gekennzeichnet, daß man auf die Stelle nach dem Austreten der Unkräuter eine wirksame Menge eines Produkts nach einem der Ansprüche 1 bis 5 aufbringt.

11. Verfahren nach Anspruch 10, dadurch gekennzeichnet, daß man eine Menge zwischen 100 und 500 g/ha, vorzugsweise zwischen 200 und 400 g/ha des Produkts nach einem der Ansprüche 1 bis 5 aufbringt.

12. Verfahren nach Anspruch 10 oder 11, dadurch gekennzeichnet, daß die Unkräuter gewählt sind aus Polygonum convolvulus, Lolium multiflorum, Solanum nigrum, Echinochloa crus-galli, Amaranthus retroflexus, Ipomea hederacea und Digitaria sanguinalis.

**13.** Verfahren nach einem der Ansprüche 10 bis 12, dadurch gekennzeichnet, daß das Stadium der Aufbringung auf die Kultur zwischen dem Stadium von zwei bis drei Blättern und dem Stadium von fünf bis sechs Blättern einschließlich liegt.

**14.** Verfahren nach einem der Ansprüche 10 bis 13 zur Kontrolle von Unkräutern, die gewählt sind aus Echinochloa crus-galli oder Digitaria sanguinalis, auf Maisfeldern im Anschluß an das Austreten des Mais und der Unkräuter durch Aufbringung von 30 bis 50 g/ha der Verbindung 2[[(4,6-Dimethoxypyrimidin-2-yl-)aminocarbonyl-]aminosulfonyl]N,N-dimethyl-3-pyridincarboxamid (II) und 200 bis 300 g Bromoxyniloctanoat, vorzugsweise 225 bis 275 g/ha Bromoxyniloctanoat, in Form einer herbiziden Zubereitung auf die Blätter der Unkräuter.